# FASCICULE DE BREVET EUROPEEN

(11) **EP 0 432 010 B1**
(45) Date de publication et mention de la délivrance du brevet: **16.03.1994**
(21) Numéro de dépôt: 90403336.2
(22) Date de dépôt: 26.11.1990
(51) Int. Cl.: H02B 1/48

(54) **Dispositif d'encastrement de barrettes portant des dispositifs électriques**
Einbauvorrichtung für elektrische Vorrichtungen tragende Stege
Apparatus for flush mounted bars carrying electrical devices

(30) Priorité: 04.12.1989 FR 8915960
(43) Date de publication de la demande: 12.06.1991
(73) Titulaire: P.G.E.P. PROFESSIONAL GENERAL ELECTRONIC PRODUCTS Société Anonyme, 92400 Courbevoie (FR)
(72) Inventeur: Blanchot, Michèle, F-78270 Cravent (FR); Gagliardi, Amédée, F-78270 Cravent (FR)
(74) Mandataire: Loyer, Bertrand

(56) Documents cités:
- EP-A- 0 109 876
- FR-A- 2 417 867
- GB-A- 990 752

## Description

La présente invention est relative à un dispositif d'encastrement de barrette portant une pluralité d'organes électriques.

Dans les brevets français 2.547.694 et 2.573.274 on a décrit des dispositifs constitués par un profilé rectangulaire dans lequel on peut placer des fiches de prise de courant, des fusibles ou autres appareillages électriques. Ces dispositifs sont d'une manière générale mis en place par fixation au mur, cloison, ou autre paroi du profilé portant les divers éléments au moyen de vis. Ce mode de fixation est relativement long à mettre en oeuvre et ne permet pas d'encastrer le dispositif qui fait saillie de façon peu esthétique.

La présente invention a pour objet un dispositif permettant une fixation par encastrement d'un barreau parallélépipédique portant une multiplicité d'appareillages électriques du type constitué par un profilé à l'intérieur duquel sont placés les uns à côté des autres une pluralité d'appareillages électriques, ledit profilé comportant à sa base deux replis se faisant face, caractérisé par le fait qu'il comporte deux pattes pivotantes, pliées en trois parties en Z, munies d'une ouverture dont la largeur est égale à la largeur dudit profilé, qui sont enfilées en position symétrique sur ledit profilé et basculées de 90° de façon que la partie supérieure du Z vienne en appui contre la face avant d'une cloison porteuse tandis que la partie inférieure du Z vient en appui sur la face arrière du profilé, les pattes étant maintenues dans cette position par un moyen de verrouillage.

De préférence, le moyen de verrouillage est constitué par une palette coulissant dans les deux replis du profilé, cette palette comportant un repli venant s'engager sur la partie inférieure du Z.

De préférence également, la découpe dans laquelle vient s'encastrer le barreau a une forme spéciale en I.

A titre d'exemple et pour faciliter la compréhension de l'invention, on a représenté aux dessins annexés :
Figure 1, une vue en coupe transversale du dispositif à encastrer;
Figure 2, une vue en élévation latérale de la figure 1;
Figure 3, une vue à plus grande échelle d'une patte de fixation en Z;
Figures 4 à 8, cinq vues schématiques à petite échelle, illustrant la mise en oeuvre de l'invention;
Figure 9, une vue à grande échelle, en perspective, d'une palette coulissante de verrouillage;
Figure 10, une vue schématique en perspective illustrant une forme de découpe de l'orifice d'encastrement.

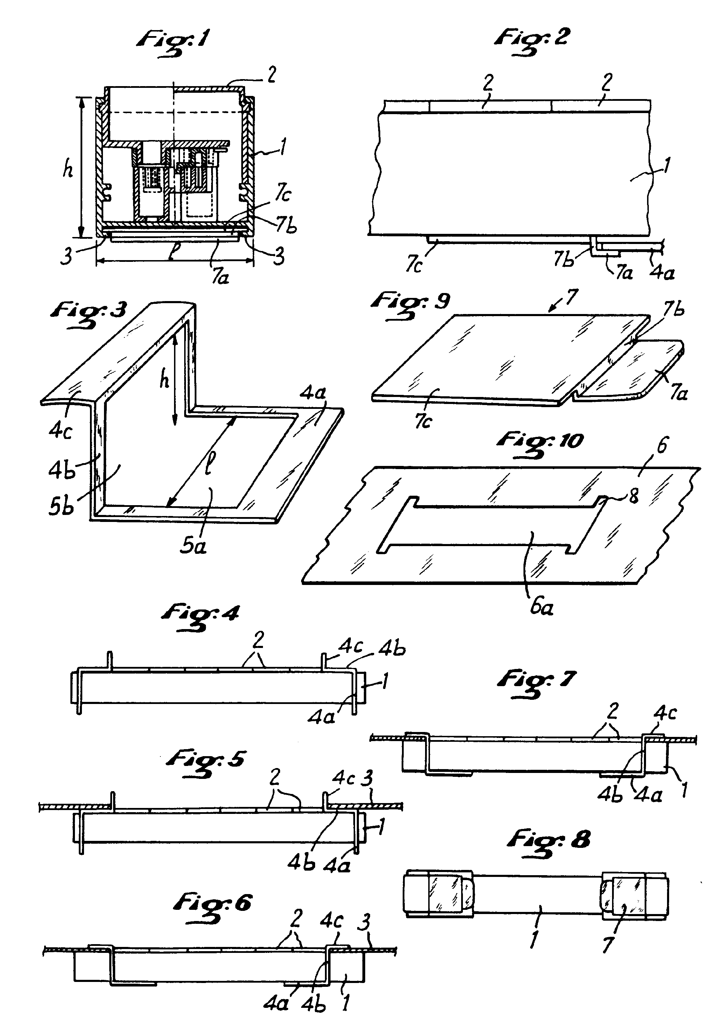

En se reportant à la figure 1, on voit que le dispositif à encastrer est constitué par un profilé 1, à l'intérieur duquel on a mis en position des appareillages électriques 2. Dans l'exemple représenté, l'appareillage électrique 2 est une fiche femelle de prise de courant. Il est connu de mettre ainsi côte à côte dans un même profilé 1, des fiches de prises de courant montées en série, un fusible, un interrupteur etc.

La face arrière du profilé 1 comporte deux replis 3 qui se font face. Il est connu de fixer à une cloison un support comportant deux rebords qui sont enfilés par coulissement dans les replis 3. On obtient ainsi une excellente fixation. Cependant, cela suppose de fixer le support à la cloison par des vis et d'autre part le barreau parallélépipédique 1-2 se trouve ainsi en relief par rapport à la cloison.

La présente invention concerne un système de fixation qui permet d'encastrer le barreau parallé-lépipédique dans une cloison et de l'y fixer sans vis. Pour cela, on utilise deux pattes de fixation 4 qui sont représentées à la figure 3. Cette patte 4 est repliée en Z en trois parties pliées à 90° : une partie 4a, dite partie inférieure ; une partie 4c, dite partie supérieure ; une partie 4b, dite partie médiane. Les parties inférieure 4a et médiane 4b comportent l'une et l'autre une ouverture 5a, 5b dont la largeur "l" est égale à la largeur du profilé 1 ; tandis que la hauteur "h" de l'ouverture 5b est égale à la hauteur du profilé 1. Les ouvertures 5a et 5b se rejoignent.

Comme on le voit sur les figures 4 à 6, on enfile une patte 4 à chaque extrémité du profilé 1, les deux pattes étant placées de façon symétrique (figure 4). Puis on présente le profilé 1 et ses deux pattes de fixation 4 dans l'ouverture 6a ménagée dans la cloison 6 (figure 5). Ensuite, on fait basculer de 90° les deux pattes 4 de façon que la partie 4c vienne s'appliquer contre la face avant de la cloison 6, la partie médiane 4b se trouvant perpendiculaire à l'axe du profilé 1 et la partie 4a étant appliquée contre la face arrière dudit profilé 1 (figure 6).

Les deux pattes 4 étant immobilisées dans cette position par tout moyen approprié, le profilé 1 se trouve ainsi maintenu en position encastrée en étant porté par la cloison 6.

Le moyen d'immobilisation des pattes 4 peut être constitué par deux verrous coulissants 7. Chaque verrou est constitué par une palette également pliée en Z en trois parties 7a, 7b, 7c. La partie 7c coulisse dans les deux replis 3 du profilé 1; la partie intermédiaire 7b a une hauteur égale à l'épaisseur de la partie 4a de la patte 4 ; et la partie 7a constitue une languette qui vient recouvrir la partie 4a de la patte 4.

De préférence, comme cela est représenté à la figure 10, l'orifice 6a découpé dans la cloison 6 a une forme de I majuscule pour laisser passer les deux côtés de la partie 4a lorsque le profilé 1 muni de ses deux pattes de fixation est représenté dans ledit orifice.

## Revendications

1. Dispositif permettant la fixation, par encastrement dans un orifice (6a) pratiqué dans une cloison (6), d'un barreau parallélépipédique (1, 2) constitué par un profilé (1) portant une pluralité d'appareillages électriques (2), ledit profilé (1) comportant à sa base deux replis (3) se faisant face, caractérisé par le fait qu'il comporte deux pattes de fixation (4), pivotantes, pliées en trois parties en Z, munies chacune d'une ouverture (5a, 5b) dont la largeur ("1") est égale à la largeur dudit profilé (1) ; lesdites pattes (4) étant enfilées, symétriquement, sur les deux extrémités du profilé (1) et basculées de 90°; de façon que la partie supérieure (4c) du Z vienne en appui contre la face avant de la cloison (6), tandis que la partie inférieure (4a) du Z vient en appui sur la face arrière du profilé (1), lesdites pattes (4) étant maintenues en cette position par un moyen de verrouillage.

2. Dispositif selon la revendication 1, dans lequel la partie médiane (4b) de chaque patte de fixation (4) a une hauteur (h) égale à la hauteur du profilé (1).

3. Dispositif selon la revendication 1 ou 2, dans lequel le moyen de verrouillage de chaque patte de fixation (4) est constitué par une plaque (7) coulissant dans les replis (3) du profilé, comportant une languette (7a) décalée en hauteur pour venir se placer sur la partie inférieure (4a) de la patte (4).

4. Dispositif selon l'une des revendications 1 à 3, dans lequel l'ouverture (6a) pratiquée dans la cloison (6) est en forme de I majuscule de façon à comporter, à chaque extrémité, deux découpes (8) pour laisser le passage aux deux côtés de la partie inférieure (4a) lorsque le profilé (1) est présenté dans l'orifice (6a).

## Claims

1. A device permitting the fixing, by fitting in an orifice (6a) formed in a panel (6), of a parallelepipedic bar (1, 2) constituted by a section (1) carrying a plurality of electrical devices (2), said section (1) including on its base two opposed bent over portions (3), characterised by the fact that it includes two pivotable fixing plates (4) bent in three parts to form a Z, each provided with an opening (5a, 5b) of which the width ("I") is equal to the width of said section (1); said plates (4) being engaged symmetrically on the two ends of the section (1) and swung through 90°; such that the upper part (4c) of the Z comes to bear against the front face of the panel (6), whilst the lower part (4a) of the Z comes to bear on the rear face of the section (1), said plates (4) being held in this position by locking means.

2. A device according to Claim 1, in which the median part (4b) of each fixing plate (4) has a height (h) equal to the height of the section (1).

3. A device according to Claim 1 or 2, in which the locking means of each fixing plate (4) is constituted by a plate (7) sliding within the bent over portions (3) of the section, including a tongue (7a) displaced in height so as to become disposed on the lower part (4a) of the plate (4).

4. A device according to one of Claims 1 to 3, in which the opening (6a) formed in the panel (6) is in the form of a capital I so as to include, at each end, two cut-outs (8) to permit the passage at both sides of the lower part (4) when the section (1) is presented in the opening (6a).

## Patentansprüche

1. Befestigungsvorrichtung zum Einbau einer Leiste (1, 2) in eine in einer Trennwand (6) ausgebildete Öffnung (6a), wobei die Leiste die Form eines Parallelepipeds aufweist und durch ein Profil (1) gebildet ist, das eine Mehrzahl von elektrischen Apparaturen (2) trägt und an seiner Grundfläche zwei einander zugewandte Falze (3) aufweist, **dadurch** **gekennzeichnet** daß sie zwei verschwenkbare Befestigungslaschen (4) umfaßt, die in drei Abschnitten zu einem Z gefaltet sind und deren jede mit einer Öffnung (5a, 5b) versehen sind, deren Breite ("I") gleich der Breite des besagten Profils (1) ist, wobei die Laschen (4) symmetrisch auf die zwei Enden des Profils (1) aufgeschoben und um 90° so gekippt sind, daß der obere Teil (4c) des Z zur Anlage gegen die Vorderseite der Trennwand (6) gelangt, während sich der untere Teil (4a) des Z an die Rückseite des Profils (1) anlegt, und wobei die Laschen (4) in dieser Lage durch ein Verriegelungsmittel gehalten sind.

2. Vorrichtung nach Anspruch 1, bei welcher der mittlere Teil (4b) jeder Befestigungslasche (4) eine Höhe (h) aufweist, die gleich der Höhe des Profils (1) ist.

3. Vorrichtung nach Anspruch 1 oder 2, bei der das Verriegelungsmittel jeder Befestigungslasche (4) durch eine Platte (7) gebildet ist, die in den Falzen (3) des Profils verschiebbar ist und eine höhenversetzte Zunge (7a) aufweist, mit der sie auf den unteren Teil (4a) der Lasche (4) verbringbar ist.

4. Vorrichtung nach einem der Ansprüche 1 bis 3, bei der die in der Trennwand (6) angebrachte Öffnung (6a) in Form des Großbuchstabens I ausgebildet ist derart, daß sie an jedem Ende zwei Ausschnitte (8) zur Ausbildung eines Durchlasses für die zwei Seiten des unteren Teils (4a) umfaßt, wenn das Profil (1) in der Öffnung (6a) sitzt.
